# EUROPEAN PATENT APPLICATION

(11) **EP 1 100 031 A2**
(43) Date of publication of application: **16.05.2001**
(21) Application number: 00309215.2
(22) Date of filing: 19.10.2000
(51) Int. Cl.: G06F 17/60

(54) **System and methods for providing instant internet response to traditional braodcast advertising**

(30) Priority: 09.11.1999 US 436148
(71) Applicant: NCR INTERNATIONAL INC., Dayton, Ohio 45479 (US)
(72) Inventor: Stelling, Jonathan Miles, Atlanta, Georgia 30342 (US)
(74) Representative: Williamson, Brian

(57) **Abstract**

An advertising system comprises a receiving unit for receiving broadcast advertising, the receiving unit including a response button that, when depressed by a customer, causes the receiving unit to send out a signal over the internet requesting additional information relating to the advertising. The advertising system further includes a retailer data center for receiving the signal sent out by the receiving unit, the retailer data center including an enterprise commerce server that looks up the requested information in a Web database and a mail server for e-mailing the requested information back to the consumer.

## Description

The present invention relates generally to improvements to systems and methods for broadcast advertising, and more particularly to systems and methods for providing instant internet responses to traditional broadcast advertising.

Retailers typically advertise their products through a number of different media, including television, radio, print, and the internet. Broadcast advertising, such as television and radio advertising, has the advantage of being able to reach large target audiences. Unfortunately, a typical broadcast advertisement is limited to 30 seconds or less in duration. Thus, the amount of information that can be provided in the advertisement is limited. The retailer can, of course, place a telephone number and mailing address in the ad, together with an invitation for the consumer to call or mail for additional information. However, that approach is cumbersome for both the customer and the retailer.

In addition, traditional broadcast advertising provides little meaningful feedback to the retailer. Without meaningful feedback, it is difficult for the retailer to make intelligent decisions as to how best to allocate its advertising dollars among the various available media.

There is thus a need for an advertising system which provides instant, easy consumer response to broadcast advertising.

These and other disadvantages of the prior art are addressed by various aspects of the present invention, which provides an advertising system, comprising a receiving unit for receiving broadcast advertising, the receiving unit including a response button that, when depressed by a customer, causes the receiving unit to send out a signal over the internet requesting additional information relating to the advertising. The advertising system further includes a retailer data center for receiving the signal sent out by the receiving unit, the retailer data center including an enterprise commerce server that looks up the requested information in a Web database and a mail server for e-mailing the requested information back to the consumer.

According to a first aspect of the present invention there is provided an advertising system, comprising: a receiving unit for receiving broadcast advertising, the receiving unit including a response button that, when depressed by a customer, causes the receiving unit to send out a signal over the internet requesting additional information relating to the advertising;
a retailer data center for receiving the signal sent out by the receiving unit, the retailer data center including an enterprise commerce server that looks up the requested information in a Web database and a mail server for e-mailing the requested information back to the consumer.

According to a second aspect of the present invention there is provided a receiving unit for use in an advertising system, the receiving unit comprising:
a control software module;
a data storage module accessible by the control software module for storing data;
a date/time module accessible by the control software module for providing current date and time information;
an input/output module for providing an interface between the control software module and input/output devices in the receiving unit, the input/output devices including a response button and a station selector, such that when the response button is depressed, the control software module uses information from the data storage module and from the input/output devices to send out a message signal.

According to a third aspect of the present invention there is provided a method of obtaining consumer responses to advertising, comprising the following steps:
(a) providing a consumer with a receiving unit, the receiving unit having a response button that, when depressed, causes the receiving unit to send out a signal over the internet requesting additional information;
(b) broadcasting to the receiving unit an advertisement including an invitation to the consumer to press the response button to request additional information;
(c) upon receiving a request for information from the receiving unit, looking up the requested information and then e-mailing it to the consumer.

An embodiment of the present invention will now be described, by way of example, with reference to the accompanying drawings, in which:
Fig. 1 shows a diagram of an advertising system according to the present invention;
Fig. 2 shows a diagram of an internet appliance for use in the advertising system shown in Fig. 1; and
Fig. 3 shows a flowchart of a method according to the present invention for providing instant consumer response to traditional broadcast advertising.

The present invention now will be described more fully with reference to the accompanying drawings. However, the described invention may be embodied in various forms and should not be construed as limited to the examples set forth herein. Rather, these examples are described in detail so that this disclosure will be thorough and complete, and will fully convey the structure, operation, functionality and potential scope of applicability of the invention to those skilled in the art.

The present invention brings together the internet and traditional television advertising to allow a retailer, through its Web site, to provide information in addition to the information containing in an advertisement at a minimal cost. When a retailer wants to provide additional information with an advertisement, the retailer prepares advertising copy that contains an explanation during the course of the advertisement instructing the consumer to depress a response button on his or her television or television remote control, radio, or cellular telephone. Further, by taking advantage of Web technologies, the present invention enables retailers to make more informed budget allocations for various types of media based upon direct consumer responses.

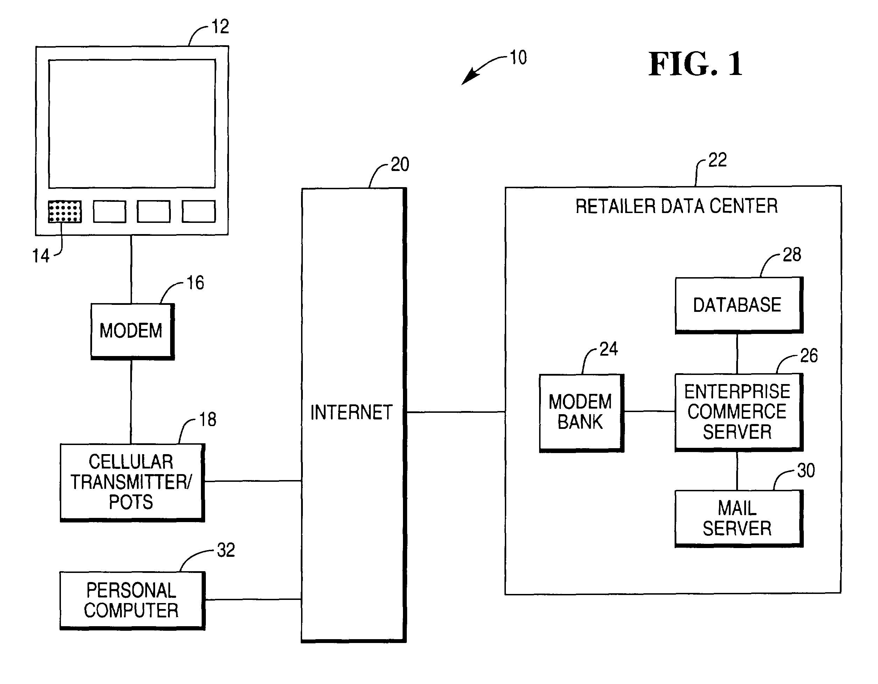

Fig. 1 shows a first embodiment of a system 10 according to the present invention. Target consumers are provided with an internet appliance 12. The internet appliance 12 is a receiving unit, such as a television, radio, or even a cellular telephone, that receives traditional broadcasts. In addition, the appliance 12 is connected to the internet 20 and includes a response button 14, described in further detail below. The connection to the internet 20 is provided by a modem 16 and a telephone connection 18 comprising cellular transmitter, plain old telephone service (POTS), a cable connection, or other suitable connection.

Advertising is broadcast to the internet appliance 12 using traditional methods, such as a cable connection, antenna, satellite dish, or the like. According to the present embodiment of the invention, this advertising includes a message to the consumer that if additional information is desired, the consumer may depress response button 14 on the internet appliance 12. When the response button 14 is depressed, the internet appliance 12 sends out a request signal over the internet 20 to a retailer data center 22.

In the retailer data center 22, a modem bank 24 receives the request signal sent out by the internet appliance 12, and relays the signal to an enterprise commerce server 26. In response to the signal, the enterprise commerce server 26 performs a lookup operation in a database 28. The lookup operation may return a Web page, or, alternatively, the lookup operation may return a hyperlink to a Web page containing the requested information.

After the lookup operation is performed, the information or the link is then e-mailed back to the consumer using a mail server 30. The consumer may then read the e-mailed information on a personal computer 32. Alternatively, the internet appliance 12 may be equipped with the capability of reading e-mail directly.

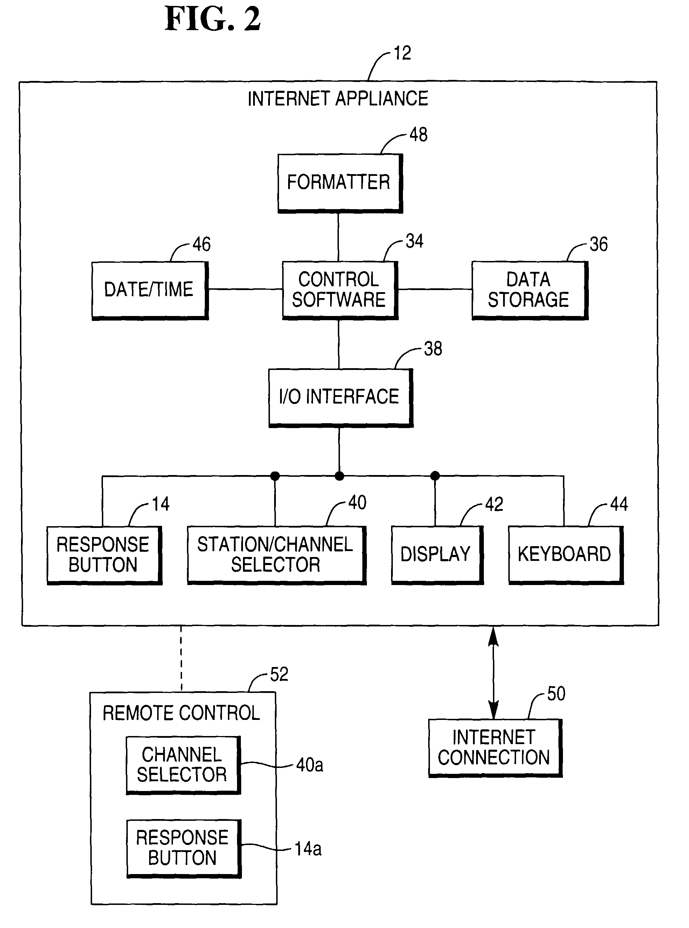

Fig. 2 is a diagram of the internet appliance 12 shown in greater detail. The internet appliance 12 is controlled by a control software module 34 that is run on a microprocessor. Data storage 36, provided by a disk or other persistent memory, is used to store information on a long-term basis for use by the control software module 34. I/O interface module 36 provides an interface between the control software module 34 and various input and output devices used in the internet appliance, including the response button 14, a station/channel selector 40, a display 42, and a keyboard 44. It will be apparent that alternative configurations of input and output devices may be used in conjunction with the internet appliance 12, as desired.

When the response button 14 is depressed by the consumer, the control software constructs a request signal to be sent out to the retailer data center 22 shown in Fig. 1. The control software module 34 accesses a date/time module 46 which provides information as to the exact date and time at which the response button 14 was depressed. Through I/O interface 38, which provides access to the station/channel selector 40, the control software module 34 determines what station or channel the internet appliance was set to receive at the time the response button was depressed.

Formatter object 48 is used by the control software module 34 to construct a request signal that includes the date/time and station/channel information. In the present embodiment, the request signal also includes the consumer's e-mail address, or other identifying information, which is stored in data storage 36. The formatted request signal is then sent to the retailer data center through internet connection 50. Returning to Fig. 1, once the request signal is related to the retailer data center 22, the enterprise commerce server 26 may determine from the date/time and channel/station information which information is being requested by the consumer.

As shown in Fig. 2, the internet appliance 12 further includes a remote control unit 52, providing a remote station/channel selector 40a and a response button 14a. The remote control unit 52 is coupled to the internet appliance 12 using infrared or other suitable technology. It will be appreciated that other devices having a response button can be coupled to the internet appliance 12, as desired. These devices could include, for example, a keyboard or a mouse.

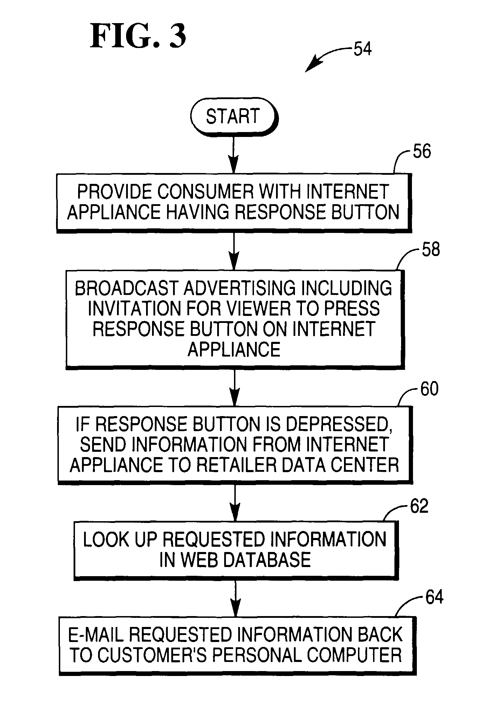

Fig. 3 shows a flowchart of a method 54 according to the present invention. In step 56, consumers are provided with an internet appliance, such as a television, radio, or cellular telephone, that includes a response button such as that described above. In step 58, the retailer broadcasts advertising over the internet appliance. The advertising includes an invitation to the consumer to press the response button for additional information. In step 60, if the response button is pressed by the consumer, a request signal is sent to a retailer data center. In step 62, the retailer data center looks up the requested information in a Web database. Finally, in step 64, the requested information is e-mailed back to the consumer.

The present invention provides retailers with the capability to provide additional advertising or offer information, in addition to that provided to consumers through traditional television advertising on a one-to-one interactive basis. It has a number of advantages for the retailer and for the consumer.

From the retailer's point of view, the present invention has the following advantages:
1. It allows the retailer to determine how best to allocate advertising dollars across television and the internet.
2. It allows the retailer to track consumer response to television advertising.
3. It drives customer traffic to a web site by television advertising.
4. It drives customer traffic to a particular web page, adding further detail to a television offer, on a web site.
5. It provides customers with additional information on particular offers through the retailer's web sit.
6. It provides customers with additional information on particular offers through the retailer's web site.
7. It channels customer inquiries to the Web instead of to call centers, thereby reduce staffing overhead.

From the consumer's point of view, the present system provides the following advantages:
1. The consumer no longer has to remember the name of a brand, the name of a product, or an offer number.
2. It allows the consumer to find out more information about a product that was only briefly mentioned in a television advertisement.

The above list of advantages is illustrative only. Other advantages will be apparent to those of ordinary skill in the art.

The present invention provides retailers the ability to track consumer response and interest generated from traditional media advertisements. By routing the additional information set to and accessed later on by consumers through the enterprise commerce server, retailers are able to measure response and interest from traditional advertising. This measurement assists retailers in making their advertising budget allocations across traditional media. Retailers using the present invention will be able to measure responses to a particular advertisement using methods similar to those currently used to measure consumer responses to banner ads appearing on Web pages.

It will be apparent to those skilled in the art that various modifications and variations can be made in the present invention without departing from the scope of the present invention.

## Claims

1. An advertising system, comprising: a receiving unit for receiving broadcast advertising, the receiving unit including a response button that, when depressed by a customer, causes the receiving unit to send out a signal over the internet requesting additional information relating to the advertising;
a retailer data center for receiving the signal sent out by the receiving unit, the retailer data center including an enterprise commerce server that looks up the requested information in a Web database and a mail server for e-mailing the requested information back to the consumer.

2. A system as claimed in claim 1, wherein the receiving unit is connected to a modem which is connected to the internet using a cellular transmitter.

3. A system as claimed in claim 1 or claim 2, wherein the receiving unit is connected to a modem which is connected to the internet using a POTS connection.

4. A system as claimed in any preceding claim, wherein the receiving unit further includes a remote control unit, and wherein the response button is located on the remote control unit.

5. A receiving unit for use in an advertising system, the receiving unit comprising:
a control software module;
a data storage module accessible by the control software module for storing data;
a date/time module accessible by the control software module for providing current date and time information;
an input/output module for providing an interface between the control software module and input/output devices in the receiving unit, the input/output devices including a response button and a station selector, such that when the response button is depressed, the control software module uses information from the data storage module and from the input/output devices to send out a message signal.

6. A receiving unit as claimed in claim 5, wherein the receiving unit comprises a television.

7. A receiving unit as claimed in claim 5, wherein the receiving unit comprises a radio.

8. A receiving unit of as claimed in claim 5, wherein the receiving unit comprises a cellular telephone.

9. A receiving unit as claimed in any of claims 5 to 8, wherein the receiving unit includes a remote control unit, and wherein the response button is located on the remote control unit.

10. A method of obtaining consumer responses to advertising, comprising the following steps:
(a) providing a consumer with a receiving unit, the receiving unit having a response button that, when depressed, causes the receiving unit to send out a signal over the internet requesting additional information;
(b) broadcasting to the receiving unit an advertisement including an invitation to the consumer to press the response button to request additional information;
(c) upon receiving a request for information from the receiving unit, looking up the requested information and then e-mailing it to the consumer.
